# EUROPÄISCHE PATENTSCHRIFT

(11) **EP 1 674 140 B1**
(45) Veröffentlichungstag und Bekanntmachung des Hinweises auf die Patenterteilung: **01.07.2015**
(21) Anmeldenummer: 05111969.1
(22) Anmeldetag: 12.12.2005
(51) Int. Cl.: B01D 5/00, B01D 8/00, B01D 53/00, F25J 3/06

(54) **Verfahren und Vorrichtung zur Partialkondensation**
Process and device for partial condensation
Procédé et appareil pour condensation partielle

(30) Priorität: 21.12.2004 DE 102004062776
(43) Veröffentlichungstag der Anmeldung: 28.06.2006
(73) Patentinhaber: Messer Group GmbH, 65812 Bad Soden (DE)
(72) Erfinder: Herzog, Friedhelm Dr., 47803 Krefeld (DE)
(74) Vertreter: Münzel, Joachim R.

(56) Entgegenhaltungen:
- EP-A- 1 473 071
- EP-A- 1 602 401
- WO-A-95/24585
- DE-C1- 10 223 845
- DE-C1- 19 517 273
- DE-C1- 19 645 487
- FR-A- 2 755 873

## Beschreibung

Die Erfindung betrifft ein Verfahren sowie eine Vorrichtung zur Partialkondensation, bei dem bzw. der ein mit einem zu kondensierenden Stoff beladener Gasstrom in einem Kryokondensator durch Wärmetausch mit ein Kühlmedium gekühlt und dadurch der im Gasstrom enthaltenen Stoff wenigstens teilweise kondensiert.

Verunreinigungen können aus Gasen durch Kondensation oder Ausfrieren abgeschieden werden. "Unter Gasen" sind hier allgemein Abluft-, Abgas oder Prozessgasströme gemeint, die aus Dampf, dampfförmigen Stoffen oder Gasen bestehen können. Insbesondere sind darunter auch relativ hoch mit Lösemitteln beladene Abluftströme gemeint, die beispielsweise bei Prozessen in der Chemie oder als Abgase aus Tanklagern entstehen können. Unter dem Begriff "Verunreinigungen" sind hier sowohl das Gas verunreinigende und zu entsorgende Schadstoffe als auch Lösemittel oder sonstige Stoffe zu verstehen, die als Wertstoffe einer weiteren Verwendung zugeführt werden können.

Hierzu werden nach dem Stand der Technik Wärmetauscher eingesetzt, bei denen der zu reinigende Gasstrom mit Wärmetauscherflächen, die verschiedenartig ausgestaltet sein können und die mittels eines Kühlmediums gekühlt werden, in Kontakt gebracht wird. Wird dabei der Taupunkt der im Gasstrom vorhandenen Verunreinigungen unterschritten, verflüssigt oder verfestigt sich zumindest ein Teil dieser Stoffe und kann vom Trägergasstrom abgetrennt werden.

Aus der DE 19517273 C1 ist ein Verfahren sowie eine Vorrichtung zur Abgasreinigung mit Wärmetauschern bekannt, bei dem in einem ersten Wärmetauscher eine Reinigung des Prozessgases in der oben beschriebenen Weise erfolgt. Um eine Rekontamination des austretenden Gases mit Kondensat zu verhindern, kommt ein zweiter Wärmetauscher zum Einsatz, in dem der Gasstrom derart geführt wird, dass er in einer aufwärtsgerichteten Strömung mit den Wärmetauscherflächen in Kontakt kommt. Durch diese Anordnung sammelt sich das Kondensat im Eingangsbereich des zweiten Wärmetauschers an und kann so leicht abgeführt werden.

EP 1 602 401 A1 beschreibt keinen Wärmeaustausch des dem Kryokondensator zugeführten Kühlmediums mit dem aus dem Kryokondensator abgeführten Kühlmedium und kann die Patentfähigkeit der nun vorgelegten Ansprüche somit nicht beeinträchtigen.

WO 95/24585 beschreibt eine Anordnung von wenigstens zwei Wärmetauschern. Im Unterschied zur Erfindung wird bei der Dokument also das im zweiten Wärmetauscher zum Verdampfen des Kühlgases eingesetzte warme Kühlgas nicht wieder in den ersten Wärmetauscher rückgeführt und parallel zum primären Kühlmedium in Wärmetausch mit dem Produktstrom gebracht, sondern in seriell angeordneten Wärmetauscher.

Der Anteil der aus dem Trägergas abgetrennten Stoffmenge gegenüber der insgesamt im Gas vorhandenen Stoffmenge ist in erster Linie vom Grad der Taupunktunterschreitung abhängig. Beim Abkühlprozess kommt es jedoch in der Regel zu einer Übersättigung des Gasstroms und zur Bildung von Aerosolen. Da die Aerosole im Wärmetauscher nur zu einem sehr kleinen Teil abgeschieden werden, ist die tatsächlich vom Trägergasstrom abtrennbare Stoffmenge kleiner als die aufgrund der temperaturabhängigen Dampfdrücke der Stoffe theoretisch erreichbare Abscheidung. Die Aerosole bilden so einen erheblichen Anteil der mit dem Trägergasstrom den Kondensator verlassenden Verunreinigungen.

Aufgabe der vorliegenden Erfindung ist daher, die Bildung und Ausbreitung von Aerosolen im Prozeßgas zu vermeiden.

Gelöst ist diese Aufgabe bei einem Verfahren der eingangs genannten Art dadurch, dass das dem Kryokondensator zuzuführende Kühlmedium vor seiner Zuführung an den Kryokondensator durch Wärmekontakt mit einem Wärmeübertragungsmedium erwärmt und/oder verdampft wird. Vor seiner Zuführung zum Kryokondensator wird das Kühlmedium dabei verdampft und/oder auf einen Temperaturwert vorgewärmt, der sich der Temperatur des beladenen und zu reinigenden Gasstroms im Kryokondensator annähert.

Der Erfindung liegt der Gedanke zu Grunde, dass die Bildung von Aerosolen umso geringer ausgeprägt ist, je geringer der Unterschied zwischen der Temperatur des Kühlmediums und der Temperatur des Gasstroms im Kryokondensator ist. Unter "Kryokondensator" ist dabei jede Einrichtung zu verstehen, die die Übertragung von Wärmeenergie von einem mit einem zu kondensierenden Stoff beladenen Gasstrom auf ein kaltes fluides Kühlmedium erlaubt. Die erfindungsgemäße Erwärmung des Kühlmediums vor seiner Zuführung in den Kryokondensator zielt daher darauf ab, im Kryokondensator eine nur geringe Temperaturdifferenz zwischen dem zu reinigenden Gasstrom und dem Kühlmedium herzustellen und so die Aerosolbildung wirkungsvoll zu unterdrücken. Durch das erfindungsgemäße Verfahren wird auch die unerwünschte Eisbildung, d.h. die Bildung von festem Kondensat, vermieden.

Als Wärmeübertragungsmedium zum Erwärmen und/oder Verdampfen des dem Kryokondensator zuzuführenden Kühlmediums kann dabei beispielsweise ein Gas aus einem Leitungsnetz oder einem Tank eingesetzt werden. Vorzugsweise wird als Wärmeübertragungsmedium jedoch das Kühlmedium eingesetzt, das im Kryokondensator bereits zum Kühlen des zu reinigenden Gasstroms eingesetzt worden und aus dem Kryokondensator abgeleitet worden ist. Dieses Kühlmedium kann dabei vollständig, teilweise und/oder gemischt mit Gas aus einem Leitungsnetz oder einem Tank zur Erwärmung und/oder Verdampfen des dem Kryokondensator zuzuführenden Kühlmediums verwendet werden. Durch den Einsatz des aus dem Kryokondensator abgeleiteten Kühlmediums zum Vorwärmen des dem Kryokondensator zuzuführenden Kühlmediums wird schon aus thermodynamischen Gründen sichergestellt, dass die Temperatur des dem Kryokondensator zugeführten Kühlmediums stets etwas geringer als der zu reinigende Gastrom im Kryokondensator ist.

Für die Übertragung der Wärmeenergie vom abgeleiteten Kühlmedium auf das dem Kryokondensator zuzuführenden Kühlmedium sind verschiedene Möglichkeiten denkbar, wie beispielsweise stoffliche Mischungen oder indirekte Wärmeübertragungen über ein drittes Medium. Bevorzugt wird das dem Kryokondensator zuzuführende Kühlmedium jedoch in einem Kühlmediums-Wärmetauscher mit dem aus dem Kryokondensator abgeleiteten Kühlmedium in unmittelbaren thermischen Kontakt gebracht.

Eine weiter verbesserte Energiebilanz kann dadurch erzielt werden, dass der zu reinigende Gasstrom im Kryokondensator nochmals in thermischen Kontakt mit dem Kühlmedium gebracht wird, das zuvor durch den Kühlmediums-Wärmetauscher geführt und dort mit dem dem Kryokondensator erstmals zuzuführenden Kühlmedium in Wärmeaustausch gestanden hat. Hierdurch kann die Menge des insgesamt eingesetzten Kühlmediums deutlich verringert werden.

Zweckmäßigerweise wird das Kühlmedium vor seiner ersten und/oder einer späteren Zuführung zum Kryokondensator beheizt, und zwar auf eine Temperatur, die ausreicht, um den zu reinigenden Gasstrom auf eine Temperatur unterhalb des Taupunktes des Stoffes, der aus dem Gasstrom entfernt werden soll, zu bringen. Ein besonders geeigneter Ort zur Installierung einer Heizung ist insbesondere der Kühlmediums-Wärmetauscher selbst. Die Heizleistung kann dann unmittelbar in Abhängigkeit von dem Wärmeübertrag auf das dem Kryokondensator zuzuführende Kühlmedium geregelt werden.

Eine gleichfalls energetisch vorteilhafte Ausgestaltung der Erfindung sieht vor, dass das Kühlmedium vor seiner - ersten oder späteren - Zuführung zu dem Kryokondensator durch thermischen Kontakt mit dem gereinigten Gasstrom in Wärmetausch gebracht wird.

In einer anderen zweckmäßigen Ausgestaltung der Erfindung wird der zu reinigende Gasstrom vor seiner Zuführung zum Kryokondensator mit dem bereits gereinigten, aus dem Kryokondensator austretenden Gasstrom in thermischen Kontakt gebracht und dadurch vorgekühlt.

Die der Erfindung zugrunde liegende Aufgabe wird auch durch eine Vorrichtung der eingangs erwähnten Art, bei der der Kryokondensator mit einer Gasstromzuführung und einer Gasstromableitung für den zu reinigenden Gasstrom und mit einer Kühlmediumszuführung sowie einer Kühlmediumsableitung ausgerüstet ist, dadurch gelöst, dass die Kühlmediumszuführung an Wärmetauscherflächen eines Kühlmediums-Wärmetauschers mit einer Zuleitung für ein Wärmeübertragungsmedium thermisch verbunden ist. Das Wärmeübertragungsmedium dient dazu, die Temperatur des dem Kryokondensator zuzuführenden Mediums der Temperatur des zu reinigenden Gasstroms im Kryokondensator anzunähern und dabei auf einen Wert anzuheben, bei dem einerseits die Aerosolbildung wirkungsvoll unterdrückt und andererseits ein zur Kryokondensation ausreichenden Kühleffekt im Kryokondensator erzielbar ist.

Bevorzugt steht die Kühlmediumszuführung dabei mit der Kühlmediumsableitung in thermischem Kontakt. Durch einen solchen Aufbau wird sichergestellt, dass nur ein geringer Temperaturunterschied zwischen dem Gasstrom und dem Kühlmedium im Kryokondensator auftritt, gleichzeitig jedoch im Kryokondensator ein guter Kühleffekt erfolgt Vorteilhafterweise ist der Kryokondensator mit einer sekundären KühlmediumsZuleitung ausgerüstet, die mit einer Kühlmediumsableitung für das im Kühlmediums-Wärmetauscher abgekühlte Kühlmedium strömungsverbunden ist.

Eine andere zweckmäßige Weiterbildung der Erfindung sieht eine tertiäre Kühlmediumszuführung vor, die mit der Gasstromableitung des Kryokondensators strömungsverbunden ist. Der Begriff "tertiäre Kühlmediumszuführung" soll hier nur der sprachlichen Abgrenzung zur vorgenannnten "sekundären Kühlmediumszuführung" dienen; erfindungsgemäß ist das Vorhandensein einer solchen mit der Kühlmediumsableitung strömungsverbundenen "sekundären Kühlmediumszuführung" jedoch keine Voraussetzung für die Einrichtung einer mit der Gasstromableitung strömungsverbundenen "tertiären Kühlmediumszuführung".

Um die Energiekosten weiter zu senken ist es vorteilhaft, die Gasstromableitung des Kryokondensators über einen Wärmetauscher mit einer Kühlmediumszuführung thermisch zu verbinden, wobei es sich dabei um die erste, die sekundäre und/oder die tertiäre Kühlmediumszuführung handeln kann.

Weiter vorteilhaft ist es, wenn die Gasstromableitung des Kryokondensators in einem Wärmetauscher mit der Gasstromzuleitung des Kryokondensators in thermischen Kontakt steht.

Um die Effizienz der Reinigungswirkung zu erhöhen und die Energiekosten beim Betrieb der erfindungsgemäßen Vorrichtung zu senken, ist es besonders zweckmäßig, die erfindungsgemäße Vorrichtung mit zusätzlichen Einrichtungen zur Temperaturregulierung des Kühlmediums und/oder des Gasstroms auszurüsten. Bei diesen Einrichtungen handelt es sich beispielsweise um Temperaturfühler, Heizungen und/oder programmierbare Regeleinrichtungen, die innerhalb des Kryokondensators, eines der vorgenannten Wärmetauscher oder in den zugehörigen Zu- oder Ableitungen angeordnet sind, und denen die Aufgabe zukommt, die absolute Temperatur im Kryokondensator auf einen Wert zu regeln, bei dem der im Gasstrom enthaltene Stoff wenigstens zu einem großen Teil auskondensiert und dabei zugleich die Temperaturdifferenz zwischen dem Gasstrom und dem Kühlmedium in seinen verschiedenen Kühlmediumsleitungen im Kryokondensator möglichst gering zu halten, um die Aerosolbildung einzudämmen.

Anhand der Zeichnungen sollen nachfolgend Ausführungsbeispiele der Erfindung näher erläutert werden.

In schematischen Ansichten zeigen:
Fig. 1: das Strömungsbild einer erfindungsgemäßen Vorrichtung in einer ersten Ausführungsform und
Fig. 2: das Strömungsbild einer erfindungsgemäßen Vorrichtung in einer zweiten Ausführungsform.

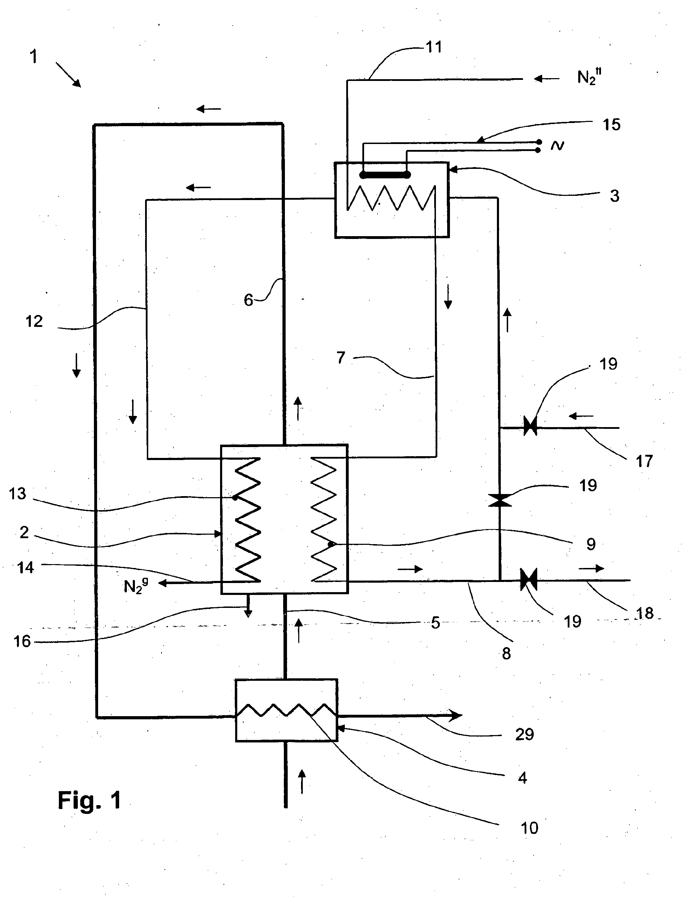

Die in Fig. 1 gezeigte Vorrichtung 1 umfasst einen Wärmetauscher zum Reinigen eines Gasstroms mittels Kryokondensation, im folgenden Kryokondenstator 2 genannt, einen Kühlmediums-Wärmetauscher 3 zum Vorwärmen und/oder Verdampfen des dem Kryokondensator 2 zugeführten Kühlmediums und einen Wärmetauscher 4 zum Vorkühlen des zu reinigenden Gasstroms. Als Kühlmedium kommt dabei bevorzugt ein Flüssiggas, beispielsweise Stickstoff, Argon oder Kohlendioxid, in Betracht. In den Ausführungsbeispielen kommt Stickstoff (N₂) zum Einsatz.

Am Kryokondensator 2 ist eine Gasstromzuführung 5 zum Zuführen eines mit wenigstens einem kondensierbaren Stoff beladenen Gasstroms in den Kryokondensator hinein sowie eine Gasstromableitung 6 zum Abführen des zumindest teilweise gereinigten Gasstroms aus dem Kryokondensator 2 hinaus angeordnet. Im Kryokondensator 2 erfolgt die Reinigung des Gasstroms von dem Stoff in an sich bekannter Weise durch thermischen Kontakt mit einem Kühlmedium an Wärmetauscherflächen 9. Zum Zuführen des Kühlmediums dient eine Kühlmediumszuführung 7, zum Ableiten des durch den thermischen Kontakt mit dem Gasstrom erwärmten Kühlmediums dient eine Kühlmediumsableitung 8.

Im Ausführungsbeispiel nach Fig. ist die Gasstromableitung 6 mit dem Wärmetauscher 4 verbunden, an dessen Wärmelauscherflächen 10 ein thermischer Kontakt zwischen dem durch die erfolgte Kryokondensation gekühlten und gereinigten Gasstrom mit dem in der Gasstromzuführung 5 zugeführten Gasstrom hergestellt wird, wodurch dieser vor seiner Zuführung zum Kryokondensator 2 vorgekühlt und somit die Energieeffizienz der Vorrichtung 1 insgesamt erhöht wird.

Um im Kryokondensator 2 die Bildung von Aerosolen im Gasstrom zu unterdrücken, wird es als wesentlich angesehen, dass die Temperaturdifferenz zwischen dem Kühlmedium und dem Gasstrom im Bereich der Wärmetauscherflächen 9 möglichst gering ist. Hierzu findet im Kühlmediums-Wärmetauscher 3 eine Übertragung von Wärme von dem durch die Kühlmediumsableitung 8 geleiteten Kühlmedium auf das dem Kryokondensator 2 zuzuführende Kühlmedium statt. Das dem Kryokondensator 2 zuzuführende Kühlmedium wird aus einer hier nicht gezeigten Quelle, bei der es sich beispielsweise um einen Flüssiggas-Tank handelt, über eine Zuleitung 11 in den Kühlmediums-Wärmetauscher 3 eingeleitet und dort durch den thermischen Kontakt mit dem aus der Kühlmediumsableitung 8 herangeführten Kühlmedium erwärmt. Wird das Kühlmedium in der Zuleitung 11 im flüssigen Zustand herangeführt, verdampft es dabei und gelangt im gasförmigen Zustand über die Kühlmediumszuführung 7 in den Kryokondensator 2. Das im Kühlmediums-Wärmetauscher 3 abgekühlte Kühlmedium aus der Kühlmediumsableitung 8 gelangt über eine sekundäre Kühlmediumszuführung 12 erneut in den Kryokondensator 2. An sekundären Wärmetauscherflächen 13 findet abermals ein Wärmetausch mit dem Gasstrom statt, bevor das Kühlmedium über eine sekundäre Kühlmediumsableitung 14 in die Atmosphäre abgelassen, der Wiederaufarbeitung oder einer weiteren Verwendung zugeführt wird. Eine mögliche "weitere Verwendung" wäre beispielsweise die, dass das Kühlmedium aus der sekundären Kühlmediumsableitung 14 erneut ein- oder mehrmals nacheinander den Kühlmediums-Wärmetauscher 3 und den Kryokondensator 2 durchläuft, um dort in thermischen Kontakt mit dem Kühlmedium bzw. dem Gasstrom gebracht zu werden.

Die Temperaturen des in den Kühlmediumszuführungen 7,12 zugeführten Kühlmediums können durch Zuschaltung einer Heizung 15, die im Kühlmediums-Wärmetauscher 3 angeordnet ist, beeinflusst werden. Die Heizung 15 kann über hier nicht gezeigte Temperaturfühler im Kryokondensator 2 und entsprechende Regeleinrichtungen auch in Abhängigkeit von der Temperatur des Gasstroms und/oder weiterer Parameter, wie beispielsweise dem Taupunkt eines zu kondensierenden Stoffs, geregelt und den jeweiligen Verhältnissen optimal angepasst werden. Die im Kryokondensator 2 aus dem Gasstrom auskondensierten Stoffe werden über einen Kondensatauslass 16 abgeführt.

Anstelle oder ergänzend zu der Aufheizung des dem Kryokondensator 2 zuzuführenden Kühlmediums durch das aus dem Kryokondensator abgeleitete Kühlmedium kann auch warmes Kühlmedium, beispielsweise gasförmiger Stickstoff aus einem Leitungsnetz oder einem Tank, über die Gaszuleitung 17 in die Kühlmediumsableitung 8 eingespeist werden. In diesem Falle kann das Kühlmedium ganz oder teilweise über eine Ableitung 18 ins Freie abgeführt oder einer sonstigen Verwendung zugeführt werden. Die Steuerung der Gasströme erfolgt in diesem Fall über Ventile 19, die manuell betätigt oder über eine geeignete, hier nicht gezeigte Regeleinrichtung automatisch angesteuert werden. Durch die Zuführung von warmem Gas über die Gaszuleitung 17 kann auch die Heizleistung der Heizung 15 verringert werden.

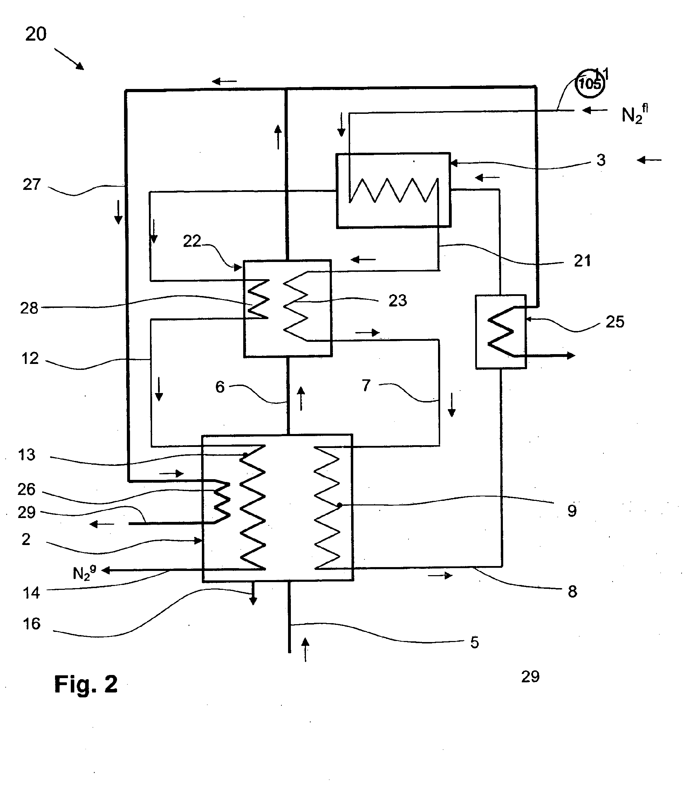

Bei der in Fig. 2 beschriebenen Vorrichtung 20 sind funktionsgleiche Bauteile mit den gleichen Bezugsziffern wie in Fig. 1 bezeichnet. Im Unterschied zur Vorrichtung 1 aus Fig. 1 weist die Vorrichtung 20 zusätzliche Wärmetauscher auf, in denen der Wärmeinhalt des gereinigten Gasstroms ausgenutzt wird, um die Energieeffizienz zu erhöhen.

Das aus der Zuleitung 11 herangeführte und im Kühlmediums-Wärmetauscher 3 verdampfte oder angewärmte Kühlmedium wird über eine Zuleitung 21 einem Wärmetauscher 22 zugeführt, an dessen Wärmetauscherflächen 23 es sodann in thermischen Kontakt mit dem gereinigten Gasstrom aus der Gasstromableitung 6 gebracht wird. Das auf diese Weise weiter erwärmte Kühlmedium wird anschließend über die Kühlmediumszuführung 7 dem Kryokondensator 2 zugeführt. Der gereinigte Gasstrom in der Gasstromableitung 6 kann ergänzend zum vorgenannten Einsatz im Wärmetauscher 22, oder statt dessen, dazu genutzt werden, mittels eines Wärmetauschers 25 das in der Kühlmediumsableitung 8 geführte Kühlmedium vor seiner Zuführung zum Kühlmediums-Wärmetauscher 3 vorzukühlen. Alternativ oder ergänzend zu den Wärmetauschern 22, 25 können auch tertiäre Wärmetauscherflächen 26 im Kryokondensator 2 zum Einsatz kommen, an denen der gereinigte Gasstrom aus der Gasstromableitung 6 über eine tertiäre Kühlmediumszuführung 27 mit dem ungereinigten Gasstrom in thermischen Kontakt gebracht wird und auf diese Weise zu dessen Abkühlung beiträgt. Der aus den tertiären Wärmetauscherflächen 26 abgeleitete gereinigte Gasstrom wird anschließend in die Atmosphäre entlassen oder einer anderweitigen Verwendung zugeführt. Im Ausführungsbeispiel nach Fig. 2 arbeiten die Wärmetauscherflächen 26 parallel zum Wärmetauscher 25, es sind jedoch im Rahmen der Erfindung andere Ausgestaltungen möglich, insbesondere, beide Wärmetauscher 25,26 in Reihenschaltung miteinander zu verbinden oder nur einen von beiden in einer erfindungsgemäßen Vorrichtung 20 vorzusehen.

In einer weiteren in Fig. 2 gezeigten Variante der Erfindung wird das im Kühlmediums-Wärmetauscher 3 gekühlte Kühlmedium auf seinem Weg durch die sekundäre Kühlmediumszuführung durch Wärmetauscherflächen 28 im Wärmetauscher 22 geführt und dort mit dem gereinigten Gasstrom in thermischen Kontakt gebracht. Diese Variante dient dazu, die Temperatur des sekundären Kühlmediums in den sekundären Wärmetauscherflächen 13 an die Temperatur des zu reinigenden Gasstromes anzunähern.

Die technische Realisierung der primären, sekundären und tertiären Wärmetauscherflächen 9, 13, 26 kann beispielsweise in Form von entsprechend strömungstechnisch voneinander getrennten Rohrbündeln erfolgen, die im Kryokondensator 2 umströmt werden.

Es versteht sich, dass die Ausführungsformen nach Fig. 1 und Fig. 2 nicht die einzig möglichen Ausgestaltungen einer erfindungsgemäßen Vorrichtung darstellen, insbesondere können nur einzelne der Wärmetauscher 22, 25, 26, 28 vorgesehen sein oder solche Wärmetauscher 22, 25, 26, 28 können auch in eine Vorrichtung der in Fig, 1 gezeigten Art eingebaut werden. Entsprechend können der Wärmetauscher 4, Leitungen 17, 18 mit Ventilen 19 oder eine Heizung 15 in eine der Vorrichtung 20 entsprechenden Vorrichtung eingebaut werden oder weitere Heizeinrichtungen an verschiedene Stellen der Vorrichtung vorgesehen sein. Auch kann das Kühlmedium aus der sekundären Kühlmediumsableitung 12 oder der gereinigte Gasstrom aus der Ableitung 29 erneut dazu eingesetzt werden, das dem Kryokondensator 2 zuzuführende Kühlmedium vorzuwärmen. Um die Reinigungswirkung zu erhöhen, können auch mehrere der oben beschriebenen Vorrichtungen 1, 20 miteinander oder mit anderen Anlagen zur Gasreinigung kombiniert werden.

### Beispiel:

Der zu reinigende Gasstrom tritt in den Kryokondensator 2 mit einer Menge von 120 kg/h Stickstoff zuzüglich einer Beladung von 60 kg/h eines organischen Lösungsmittels mit einer Temperatur von 0°C ein. Durch thermischen Kontakt mit dem Kühlmedium kühlt sich der Gasstrom bis zum Ausgang des Kryokondensators 2 an der Gasstromableitung 6 auf eine Temperatur von minus 144°C ab. In einem Flüssigtank unter einem Druck von 3,6 bar (360 000 Pa) mit einer Temperatur von minus 183°C gelagerter Stickstoff, der als Kühlmedium eingesetzt wird, wird im Wärmetauscher 3 durch thermischen Kontakt mit dem aus dem Kryokondensator 2 über die Kühlmediumsableitung 8 abgeführten Kühlmedium, das eine Temperatur von ca. minus 20°C aufweist, auf eine Temperatur von etwa minus180°C erwärmt. Anschließend findet eine weitere Erwärmung im Wärmetauscher 22 auf ca. minus 160°C statt. Zwischen dem zugeführten Kühlmedium und dem abgeführten Gasstrom besteht also nur noch eine Temperaturdifferenz von 16 K.

Das im Wärmetauscher 3 auf eine Temperatur von ca. minus 180°C abgekühlte Kühlmedium aus der Kühlmediumsableitung 8 wird über eine sekundäre Kühlmediumszuleitung 12 dem Kryokondensator zugeführt, zuvor jedoch im Wärmetauscher 22 mit dem gereinigten Gasstrom aus der Gasstromableitung 6 in Wärmeaustausch gebracht und auf eine Temperatur von minus 160°C gebracht, also auf zumindest annähernd die gleiche Temperatur wie das durch die Kühlmediumszuführung 7 herangeführte Kühlmedium. Beim Wärmetausch mit dem Gasstrom im Kryokondensator 2 erwärmt sich das sekundäre Kühlmedium auf minus 20°C.

Durch den thermischen Kontakt mit dem Kühlmedium im Wärmetauscher 22 kühlt sich der gereinigte Gasstrom auf einen Wert von ca. minus 160°C ab und wird in der Folge über die tertiäre Kühlmediumszuführung 27 in den Kryokondensator 2 geführt, in weichem er durch thermischen Kontakt mit dem ungereinigten Gasstrom an den Wärmetauscherflächen 26 zur Kühlung des Prozessgases beiträgt. Er verlässt den Kryokondensator mit einer Temperatur von minus 20°C. Bei diesem Beispiel ist kein Wärmetauscher 25 zur Vorkühlung des Kühlmediums vorgesehen; aus thermodynamischen Gründen erfolgt jedoch im Kühlmediums-Wärmetauscher 3 eine Heizung des Kühlmediums mit einer Heizleistung von ca. 0,4 kW.

### Bezugszeichenliste

- 1.: Vorrichtung
- 2.: Kryokondensator
- 3.: Kühlmediums-Wärmetauscher
- 4.: Wärmetauscher
- 5.: Gasstromzuführung
- 6.: Gasstromableitung
- 7.: Kühlmediumszuführung
- 8.: Kühlmediumsableitung
- 9.: Wärmetauscherflächen (im Kryokondensator)
- 10.: Wärmetauscherflächen (im Wärmetauscher 4)
- 11.: Zuleitung
- 12.: sekundäre Kühlmediumszuführung
- 13.: sekundäre Wärmetauscherflächen
- 14.: sekundäre Kühlmediumsableitung
- 15.: Heizung
- 16,: Kondensatauslass
- 17.: Gaszuleitung
- 18.: Ableitung
- 19.: Ventile
- 20.: Vorrichtung
- 21.: Zuleitung
- 22.: Wärmetauscher
- 23.: Wärmetauscherflächen
- 24.: -
- 25.: Wärmetauscher
- 26.: tertiäre Wärmetauscherflächen
- 27.: tertiäre Kühlmediumszuführung
- 28.: Wärmetauscherflächen
- 29.: Ableitung

## Patentansprüche

1. Verfahren zur Partialkondensation, bei dem ein mit einem zu kondensierenden Stoff beladener Gasstrom in einem Kryokondensator (2) durch Wärmetausch mit einem Kühlmedium gekühlt und dadurch der im Gasstrom enthaltenen Stoff wenigstens teilweise kondensiert,
wobei das dem Kryokondensator (2) zuzuführende Kühlmedium in einem Kühlmediums-Wärmetauscher (3) vor seiner Zuführung an den Kryokondensator (2) durch Wärmekontakt mit einem Wärmeübertragungsmedium erwärmt und/oder verdampft wird,
wobei als Wärmeübertragungsmedium zumindest teilweise aus dem Kryokondensator (2) abgeleitetes Kühlmedium eingesetzt wird,
**dadurch gekennzeichnet,**
**dass** der beladene Gasstrom im Kryokondensator (2) zusätzlich mit dem aus dem Kryokondensator (2) abgeleiteten und durch den Kühlmediums-Wärmetauscher (3) geführten Kühlmedium in thermischen Kontakt gebracht wird.

2. Verfahren nach Anspruch 1, **dadurch gekennzeichnet, dass** das Kühlmedium anschließend erneut ein- oder mehrmals nacheinander den Kühlmediums-Wärmetauscher (3) und den Kryokondensator (2) durchläuft, um dort in thermischen Kontakt mit dem Kühlmedium bzw dem Gasstrom gebracht zu werden.

3. Verfahren nach Anspruch 1 oder 2, **dadurch gekennzeichnet, dass** das Kühlmedium vor seiner ersten und/oder späteren Zuführung zum Kryokondensator (2) beheizt wird.

4. Verfahren nach einem der vorhergehenden Ansprüche, **dadurch gekennzeichnet, dass** das Kühlmedium vor seiner Zuführung zu dem Kryokondensator (2) in thermischen Kontakt mit dem gereinigten Gasstrom gebracht wird.

5. Verfahren nach einem der vorhergehenden Ansprüche, **dadurch gekennzeichnet, dass** der beladene Gasstrom im Kryokondensator (2) und/oder vor seiner Zuführung zum Kryokondensator (2) mit dem gereinigten Gasstrom in thermischen Kontakt gebracht wird.

6. Verfahren nach einem der vorhergehenden Ansprüche, **dadurch gekennzeichnet, dass** das Kühlmedium nach Durchlaufen des Kryokondensators (2) und vor der Zuführung zum Kühlmediums-Wärmetauscher (3) mit dem gereinigten Gasstrom in thermischen Kontakt gebracht wird.

7. Vorrichtung zur Partialkondensation, mit einem Kryokondensator (2), in dem ein mit einem zu kondensierenden Stoff beladener Gasstrom durch Wärmetausch mit einem Kühlmedium gekühlt wird und dadurch der im Gasstrom enthaltene Stoff zumindest teilweise kondensiert, welcher Kryokondensator (2) mit einer Gasstromzuführung (5) und einer Gasstromableitung (6) für den zu reinigenden Gasstrom und mit einer Kühlmediumszuführung (7) sowie einer Kühlmediumsableitung (8) ausgerüstet ist,
wobei die Kühlmediumszuführung (7) an Wärmetauscherflächen eines Kühlmediums-Wärmetauschers (3) mit der Kühlmediumsableitung (8) thermisch verbunden ist,
**dadurch gekennzeichnet, dass** der Kryokondensator (2) mit sekundären Wärmetauscherflächen (13) und einer sekundären Kühlmediumszuführung (12) ausgerüstet ist, die mit einer Kühlmediumsableitung für das im Kühlmediums-Wärmetauscher (3) abgekühlte Kühlmedium strömungsverbunden ist.

8. Vorrichtung nach Anspruch 7, **dadurch gekennzeichnet, dass** der Kryokondensator (2) mit einer tertiären Kühlmediumszuführung (27) ausgerüstet ist, die mit der Gasstromableitung (6) strömungsverbunden ist.

9. Vorrichtung nach einem der Ansprüche 7 oder 8, **dadurch gekennzeichnet, dass** die Gasstromableitung (6) des Kryokondensators (2) in einem Wärmetauscher (22, 25) mit einer Kohlmediumszuführung (7,11,12, 27) oder mit einer Kühlmediumsableitung (8, 14) thermisch verbunden ist.

10. Vorrichtung nach einem der Ansprüche 7 bis 9, **dadurch gekennzeichnet, dass** die Gastromableitung (6) des Kryokondensators (2) in einem Wärmetauscher (4) mit der Gasstromzuleitung (5) in thermischen Kontakt steht.

11. Vorrichtung nach einem der Ansprüche 7 bis 10, **dadurch gekennzeichnet, dass** der Kryokondensator (2) und wenigstens einer der Wärmetauscher (4, 22) in einem Gehäuse angeordnet sind.

12. Vorrichtung nach einem derAnsprüche 7 bis 11, **gekennzeichnet durch** zusätzliche Einrichtungen (15) zur Temperaturregulierung des Kühlmediums und/oder des Gasstroms.

## Claims

1. Process for partial condensation, in which a gas stream that is loaded with a substance that is to be condensed is cooled in a cryocondenser (2) by heat exchange with a cooling medium and thereby the substance present in the gas stream is at least partially condensed, wherein the cooling medium to be fed to the cryocondenser (2) is warmed and/or vaporised by heat contact with a heat transfer medium in a cooling medium heat exchanger (3) before said cooling medium is fed to the cryocondenser (2), wherein, as heat transfer medium, cooling medium at least in part derived from the cryocondenser (2) is used, **characterized in that** the loaded gas stream in the cryocondenser (2) is additionally brought into thermal contact with the cooling medium derived from the cryocondenser (2) and conducted through the cooling medium heat exchanger (3).

2. Process according to Claim 1, **characterized in that** the cooling medium then passes again once or repeatedly successively through the cooling medium heat exchanger (3) and the cryocondenser (2), in order there to be brought into thermal contact with the cooling medium and/or the gas stream.

3. Process according to Claim 1 or 2, **characterized in that** the cooling medium is heated before the first and/or later feed thereof to the cryocondenser (2).

4. Process according to any one of the preceding claims, **characterized in that** the cooling medium, before feed thereof to the cryocondenser (2), is brought into thermal contact with the purified gas stream.

5. Process according to any one of the preceding claims, **characterized in that** the loaded gas stream in the cryocondenser (2) and/or before feed thereof to the cryocondenser (2), is brought into thermal contact with the purified gas stream.

6. Process according to any one of the preceding claims, **characterized in that** the cooling medium, after passage through the cryocondenser (2) and before the feed to the cooling medium heat exchanger (3), is brought into thermal contact with the purified gas stream.

7. Device for partial condensation, having a cryocondenser (2) in which a gas stream loaded with substance that is to be condensed is cooled by heat exchange with a cooling medium and thereby the substance present in the gas stream is at least partially condensed, which cryocondenser (2) is equipped with a gas stream feed (5) and a gas stream discharge (6) for the gas stream that is to be purified and with a cooling medium feed (7) and also a cooling medium discharge (8), wherein the cooling medium feed (7) is thermally connected at heat exchange surfaces of the cooling medium heat exchanger (3) to the cooling medium discharge (8), **characterized in that** the cryocondenser (2) is equipped with secondary heat exchange surfaces (13) and a secondary cooling medium feed (12) which is flow-connected to a cooling medium discharge for the cooling medium that is cooled in the cooling medium heat exchanger (3).

8. Device according to Claim 7, **characterized in that** the cryocondenser (2) is equipped with a tertiary cooling medium feed (27) which is flow-connected to the gas stream discharge (6).

9. Device according to either of Claims 7 and 8, **characterized in that** the gas stream discharge (6) of the cryocondenser (2), in a heat exchanger (22, 25), is thermally connected to a cooling medium feed (7, 11, 12, 27) or to a cooling medium discharge (8, 14).

10. Device according to any one of Claims 7 to 9, **characterized in that** the gas stream discharge (6) of the cryocondenser (2) is in thermal contact with the gas stream feed line (5) in a heat exchanger (4).

11. Device according to any one of Claims 7 to 10, **characterized in that** the cryocondenser (2) and at least one of the heat exchangers (4, 22) are arranged in a housing.

12. Device according to any one of Claims 7 to 11, **characterized by** additional installations (15) for temperature control of the cooling medium and/or of the gas stream.

## Revendications

1. Procédé de condensation partielle, dans lequel un courant de gaz chargé d'une substance à condenser est refroidi dans un cryocondensateur (2) par échange thermique avec un réfrigérant et la substance contenue dans le courant de gaz est de ce fait au moins en partie condensée, le réfrigérant à acheminer au cryocondensateur (2) étant chauffé et/ou évaporé dans un échangeur de chaleur à réfrigérant (3) avant d'être acheminé au cryocondensateur (2) par contact thermique avec un milieu de transfert thermique, le réfrigérant au moins en partie dérivé du cryocondensateur (2) étant utilisé en tant que milieu de transfert thermique,
**caractérisé en ce que**
le courant de gaz chargé dans le cryocondensateur (2) est en outre amené en contact thermique avec le réfrigérant dérivé du cryocondensateur (2) et guidé à travers l'échangeur de chaleur à réfrigérant (3).

2. Procédé selon la revendication 1, **caractérisé en ce que** le réfrigérant circule ensuite à nouveau une ou plusieurs fois à travers l'échangeur de chaleur à réfrigérant (3) et le cryocondensateur (2) l'un après l'autre afin d'y être amené en contact thermique avec le réfrigérant ou le courant de gaz.

3. Procédé selon la revendication 1 ou 2, **caractérisé en ce que** le réfrigérant est chauffé avant d'être acheminé une première fois et/ou ultérieurement au cryocondensateur (2).

4. Procédé selon l'une quelconque des revendications précédentes, **caractérisé en ce que** le réfrigérant, avant d'être acheminé au cryocondensateur (2), est amené en contact thermique avec le courant de gaz épuré.

5. Procédé selon l'une quelconque des revendications précédentes, **caractérisé en ce que** le courant de gaz chargé est amené en contact thermique avec le courant de gaz épuré dans le cryocondensateur (2) et/ou avant d'être acheminé au cryocondensateur (2).

6. Procédé selon l'une quelconque des revendications précédentes, **caractérisé en ce que** le réfrigérant, après avoir circulé à travers le cryocondensateur (2) et avant d'être acheminé à l'échangeur de chaleur à réfrigérant (3), est amené en contact thermique avec le courant de gaz épuré.

7. Dispositif de condensation partielle, comprenant un cryocondensateur (2), dans lequel un courant de gaz chargé d'une substance à condenser est refroidi par échange thermique avec un réfrigérant et la substance contenue dans le courant de gaz est de ce fait au moins en partie condensée, lequel cryocondensateur (2) est muni d'une amenée de courant de gaz (5) et d'une dérivation de courant de gaz (6) pour le courant de gaz à épurer et d'une alimentation en réfrigérant (7) ainsi que d'une dérivation de réfrigérant (8), l'alimentation en réfrigérant (7) étant connectée thermiquement au niveau de surfaces d'échangeur de chaleur d'un échangeur de chaleur à réfrigérant (3) à la dérivation de réfrigérant (8), **caractérisé en ce que** le cryocondensateur (2) est muni de surfaces secondaires d'échangeur de chaleur (3) et d'une alimentation en réfrigérant secondaire (12) qui est connectée fluidiquement à une dérivation de réfrigérant pour le réfrigérant refroidi dans l'échangeur de chaleur à réfrigérant (3).

8. Dispositif selon la revendication 7, **caractérisé en ce que** le cryocondensateur (2) est muni d'une alimentation en réfrigérant tertiaire (27) qui est connectée fluidiquement à la dérivation de courant de gaz (6).

9. Dispositif selon l'une quelconque des revendications 7 ou 8, **caractérisé en ce que** la dérivation de courant de gaz (6) du cryocondensateur (2) est connectée thermiquement dans un échangeur de chaleur (22, 25) à une alimentation en réfrigérant (7, 11, 12, 27) ou à une dérivation de réfrigérant (8, 14).

10. Dispositif selon l'une quelconque des revendications 7 à 9, **caractérisé en ce que** la dérivation de courant de gaz (6) du cryocondensateur (2) est en contact thermique dans un échangeur de chaleur (4) avec l'amenée de courant de gaz (5).

11. Dispositif selon l'une quelconque des revendications 7 à 10, **caractérisé en ce que** le cryocondensateur (2) et au moins l'un des échangeurs de chaleur (4, 22) sont disposés dans un boîtier.

12. Dispositif selon l'une quelconque des revendications 7 à 11, **caractérisé par** des dispositifs supplémentaires (15) pour la régulation de la température du réfrigérant et/ou du courant de gaz.
